# EUROPEAN PATENT SPECIFICATION

(11) **EP 3 316 435 B1**
(45) Date of publication and mention of the grant of the patent: **25.11.2020**
(21) Application number: 17194072.9
(22) Date of filing: 29.09.2017
(51) Int. Cl.: H02J 3/18, H02J 3/38, H02M 1/12

(54) **RESONANCE SUPPRESSION DEVICE**
RESONANZUNTERDRÜCKUNGSVORRICHTUNG
DISPOSITIF DE SUPPRESSION DE RÉSONANCE

(30) Priority: 25.10.2016 JP 2016208857
(43) Date of publication of application: 02.05.2018
(73) Proprietor: Fuji Electric Co., Ltd., Kawasaki-shi, Kanagawa 210-9530 (JP)
(72) Inventor: Kofuji, Kentaro, Kawasaki-shi, Kanagawa 210-9530 (JP)
(74) Representative: Appelt, Christian W.

(56) References cited:
- EP-A1- 3 012 951
- JP-A- 2006 353 092
- US-A1- 2016 134 114
- POGAKU ET AL: "Application of Inverter-Based Distributed Generators for Harmonic Damping Throughout a Distribution Network", POWER ELECTRONICS SPECIALISTS CONFERENCE, 2005. PESC '05. IEEE 36TH, IEEE, PISCATAWAY, NJ, USA, 12 June 2005 (2005-06-12), pages 1922-1927, XP031000406, DOI: 10.1109/PESC.2005.1581894 ISBN: 978-0-7803-9033-1

## Description

### Technical Field

The present invention relates to a resonance suppression device, which is, for example, a resonance suppression device that is mounted in a voltage-source inverter connected to a power system such as an active power filter, a static reactive power compensation device (STATCOM), a self-commutated SFC and so on.

### Background Art

Patent literature 1 discloses a resonance suppression device for suppressing the resonance that is produced when a power facility (for example, a wind power generator) is connected to a power system. With this resonance suppression device, a current command value is generated by eliminating the fundamental wave component from the frequency components contained in the voltage of the power facility or the power system, and multiplying a frequency component by a gain (transfer function). By supplying a compensation current based on this current command value to the power system, the resonance suppression function is implemented.

The gain (transfer function) to use to generate a current command value is determined as follows. For example, in order to collectively suppress various harmonic components produced in a system comprised of a power facility and a power system (hereinafter simply referred to as a "system"), a gain that always assumes a fixed value is selected. Since the resonance suppression device absorbs harmonic current in harmonic voltage in the same phase (the phase of the harmonic voltage or the harmonic current is not changed, and only its magnitude is changed by applying a gain), the system behaves like a pure resistive load (impedance load). Consequently, the gain, which is a fixed value, is often set based on the reciprocal of the pure resistance value exhibited by the system.

Meanwhile, patent literature 1 discloses a control scheme for calculating the level of harmonic resonance by using the power facility's system current and so on, and increasing the gain (transfer function) when the level of harmonic resonance (the amount of harmonics produced) is high. In addition, patent literature 1 discloses a control scheme for correcting (adjusting) the value to be set as the gain, so that the current command value does not deviate from the predetermined range of a current limiter and/or the voltage command value does not deviate from the predetermined range of a voltage limiter (does not exceed the output capacity of the equipment).

US 2016/0134114 A1 discloses a control system for compensating undesired electrical harmonics on an electrical grid. Part of the control system referred to as a harmonic compensator is operatively connected with a power inverter of a power producing unit supplying power to the grid.

### Citation List

### Patent Literature

Patent Literature 1: WO 2014/175214

### Summary of Invention

### Technical Problem

However, through diligent study, the present inventor has found out that conventional resonance suppression devices, including that of patent literature 1, adjust gain only in a passive way based on the level of harmonic resonance (the amount of harmonics produced) and/or the level of the output capacity of the equipment, and that their resonance suppression function tends to be insufficient and there is room for improvement.

The present invention has been made in view of the above, and it is therefore an object of the present invention to provide a resonance suppression device that can implement an excellent resonance suppression function by utilizing the characteristics of a system that is comprised of a power facility and a power system.

### Solution to Problem

The present invention relates to a resonance suppression device according to claim 1. Claims 2 to 4 refer to specifically advantageous realizations of the resonance suppression device according to claim 1.

According to an embodiment of the present invention, a resonance suppression device has a current command value calculation unit that calculates a current command value based on a connection point voltage between a power facility and a power system, a compensation current supply unit that supplies a compensation current based on the current command value to the power system and a representative frequency extraction unit that extracts a representative frequency, in which a harmonic component is relatively large compared to other frequencies, from harmonic components of the connection point voltage, and, in this resonance suppression device, the current command value calculation unit has a gain multiplication unit that calculates the current command value by multiplying the harmonic component by a gain that matches the representative frequency.

### Advantageous Effects of Invention

According to the present invention, it is possible to provide a resonance suppression device that can implement an excellent resonance suppression function by utilizing characteristics of a system that is comprised of a power facility and a power system.

### Brief Description of Drawings

FIG. 1 is a block diagram to show a resonance suppression device provided in a wind power plant, according to a first embodiment;
FIG. 2 is a block diagram of a current command value calculation unit, clarifying the internal configuration of the representative frequency extraction unit of the first embodiment;
FIG. 3 is a block diagram to show a current command value calculation unit in a resonance suppression device, according to a second embodiment;
FIG. 4 is a block diagram, clarifying the internal configuration of the representative frequency extraction unit of FIG. 3; and
FIG. 5 is a diagram to show a specific example of a configuration of the first and second effective value calculation units in the representative frequency extraction unit, according to the second embodiment.

### Description of Embodiments

### ≪ First Embodiment ≫

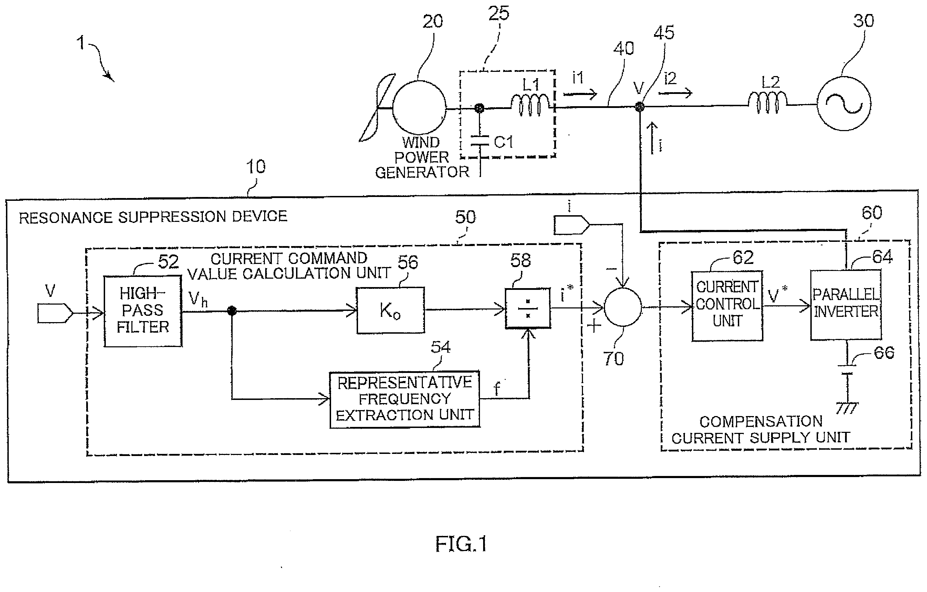

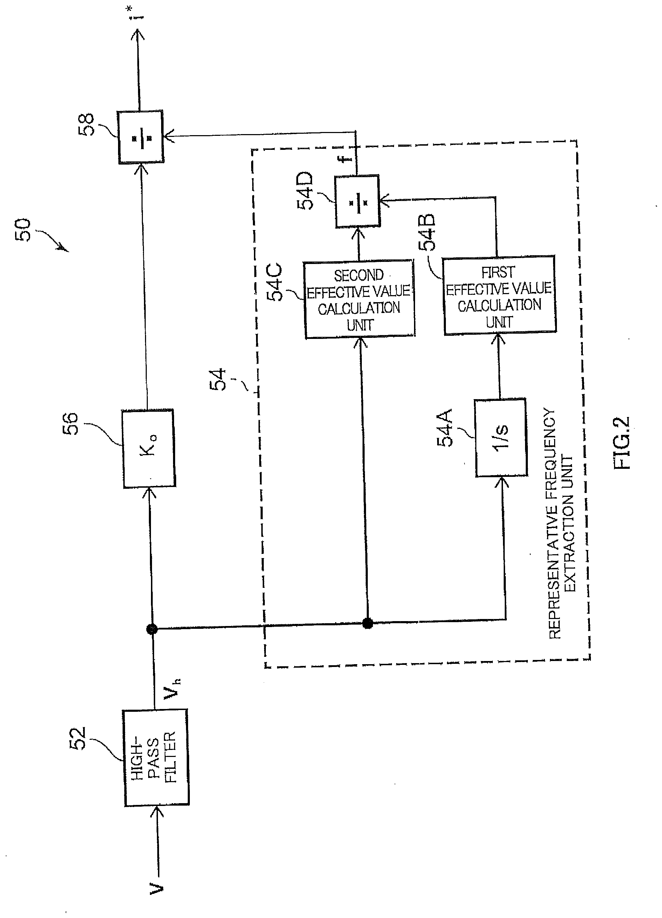

Now, the resonance suppression device 10 according to a first embodiment will be described in detail with reference to FIG. 1 and FIG. 2.

As shown in FIG. 1, the resonance suppression device 10 is installed in a wind power plant 1, and suppresses the resonance that is produced when a wind power generator (power facility) 20 is connected to a power system 30. The wind power generator 20 and the power system 30 are connected via a channel 40, and the resonance suppression device 10 is connected to a connection point 45, which is located in an intermediate part of the channel 40.

The wind power generator 20 has a harmonic filter 25, where the capacitor of the harmonic filter 25 is illustrated as C1, and the inductor of the harmonic filter 25 is illustrated as L1. Inductor L1 is equivalent to the inductor of a transformer that connects the wind power generator 20 to the power system 30. Also, the impedance of the power system 30 is illustrated as L2. Although L2 is often simulated simply as an inductor, because a variety of power generation facilities, customer facilities and power transmission facilities are connected to the actual power system and some of these facilities may have capacitors, this is, in effect, equivalent to having many LC resonance circuits. Furthermore, since the channel 40 is formed with a very long cable, the channel 40, in effect, is equivalent to an electric circuit with many LC resonance circuits. The resonance suppression device 10 has the function of suppressing the resonance caused by LC resonance circuits such as described above.

In FIG. 1, the current flowing from the wind power generator 20 to the connection point 45 on the channel 40 is represented by i1, and the current flowing from the connection point 45 of the channel 40 to the power system 30 is represented by i2. Also, the voltage at the connection point 45 on the channel 40 (the connection point voltage between the wind power generator 20 and the power system 30) is represented by V.

The resonance suppression device 10 has a current command value calculation unit 50 and a compensation current supply unit 60. The current command value calculation unit 50 calculates a current command value i* based on the connection point voltage V between the wind power generator 20 and the power system 30. The compensation current supply unit 60 supplies a compensation current i (compensation current i following current command value i*) based on current command value i*, to the connection point 45 of the channel 40 (and, furthermore, to the power system 30). The relationship here is that current i1 that flows from the wind power generator 20 to the connection point 45 on the channel 40 and current i2 that flows from the connection point 45 on the channel 40 to the power system 30 are compensated by compensation current i (i1+i=i2), so that it is possible to suppress the harmonic distortion due to harmonic components Vₕ (described later) of connection point voltage V.

The current command value calculation unit 50 has a high-pass filter 52, a representative frequency extraction unit 54, a fixed gain output unit (gain multiplication unit) 56 and a variable gain output unit (gain multiplication unit) 58.

Connection point voltage V of the wind power generator 20 and the power system 30 is input to the high-pass filter 52. The high-pass filter 52 selectively allows only harmonic components Vₕ of input connection point voltage V to pass.

The representative frequency extraction unit 54 extracts a representative frequency f, at which harmonic component Vₕ is relatively large compared to other frequencies, from among harmonic components Vₕ of connection point voltage V. The present inventor has come up with the idea of representative frequency f as a parameter that clearly exhibits characteristics of the wind power generator 20, the harmonic filter 25, the power system 30 and the channel 40. Generally, the wind power generator 20 is designed so that harmonic distortion by itself is not a problem to the power system. However, there is a problem that harmonic distortion increases due to resonance, depending on the properties and conditions of the harmonic filter 25, the power system 30 and the channel 40. Since resonance is a problem that arises when harmonic distortion increases due to the significant growth of impedance at a specific frequency, the frequencies that are included in harmonic components Vₕ are biased toward a specific frequency. The representative frequency extraction unit 54 can, for example, pin-point the frequency at which harmonic component Vₕ becomes the largest, from among harmonic components Vₕ of connection point voltage V (when there are a plurality of frequencies at which harmonic component Vₕ becomes the largest, one of them).

As shown in FIG. 2, the representative frequency extraction unit 54 includes a Laplace integration unit (integration unit) 54A, a first effective value calculation unit 54B, a second effective value calculation unit 54C and a division unit 54D. In the Laplace integration unit 54A, harmonic component Vₕ of connection point voltage V is subjected to the Laplace integration (integration). The first effective value calculation unit 54B calculates the effective value of the Laplace-integrated value (integrated value) of harmonic component Vₕ of connection point voltage V. The second effective value calculation unit 54C calculates the effective value of harmonic component Vₕ of connection point voltage V. The division unit 54D extracts representative frequency f by dividing the effective value of harmonic component Vₕ of connection point voltage V by the effective value of the Laplace-integrated value (integrated value) of harmonic component Vₕ of connection point voltage V.

Here, when representative frequency f is represented by angular frequency ω, the following explanation holds. When voltage V(s) is integrated, the transfer function is V(s)/s. The frequency response is V(jω)/jω, the phase lags behind voltage V(jω) by 90°, and the amplitude becomes 1/ω times as large. ω is calculated using this property -- that is, the amplitude becomes 1/ω times as large. The effective value is proportional to the magnitude of the amplitude, so that the ratio between the effective value of voltage and the effective value of the integrated value of voltage is ω:1.

The fixed gain output unit 56 outputs a predetermined fixed gain K₀. As mentioned earlier, since the resonance suppression device 10 absorbs harmonic current in harmonic voltage in the same phase (the phase of the harmonic voltage or the harmonic current is not changed, and only its magnitude is changed by applying a gain), the system behaves like a pure resistive load (impedance load). Considering this point, fixed gain K₀ can be set based on, for example, the reciprocal of the pure resistance value R exhibited by the system (K₀ = 1/R).

A variable gain output unit 58 outputs a variable gain K' by dividing fixed gain K₀, which is generated in the fixed gain output unit 56, by representative frequency f, which is generated in the representative frequency extraction unit 54 (K' = K₀/f). That is, when variable gain K' is viewed as a virtual resistance, the value of this virtual resistance changes with representative frequency f (frequency-dependent resistance).

The fixed gain output unit 56 and the variable gain output unit 58, when viewed as one functional block "gain multiplication unit," have a function of calculating current command value i* by multiplying harmonic component Vₕ of connection point voltage V by variable gain K' that matches representative frequency f. Variable gain K' can be expressed as K' = K₀/f, so that the fixed gain output unit 56 and the variable gain output unit 58 (gain multiplication unit) multiply harmonic component Vₕ of connection point voltage V by variable gain K', which is inversely proportional to representative frequency f.

Note that variable gain K' does not necessarily have to be inversely proportional to representative frequency f. For example, the fixed gain output unit 56 and the variable gain output unit 58 (gain multiplication unit) may make smaller variable gain K', by which harmonic component Vₕ of connection point voltage V is multiplied, as representative frequency f increases, and make bigger variable gain K', by which harmonic component Vₕ of connection point voltage V is multiplied, as representative frequency f decreases.

Current command value i* that is output from the current command value calculation unit 50 is input to an addition unit 70. In addition, actual compensation current i, which is based on current command value i*, is input to the addition unit 70. The addition unit 70 calculates the difference (i*-i) between current command value i* and compensation current i, and outputs this difference to the compensation current supply unit 60.

The compensation current supply unit 60 has a current control unit 62, a parallel inverter 64 and a direct current power supply 66.

The difference (i*-i) between current command value i* and compensation current i is input from the addition unit 70 to the current control unit 62. The current control unit 62 calculates a voltage command value V* based on the difference (i*-i) between input current command value i* and compensation current i.

The parallel inverter 64 is powered and driven by the direct current power supply 66. Voltage command value V* is input from the current control unit 62 to the parallel inverter 64. The parallel inverter 64 calculates compensation current i based on voltage command value V* that is received as input. The parallel inverter 64 is parallel-connected to the power system 30 via a transformer (not shown), and compensation current i that is output from the parallel inverter 64 is supplied to the power system 30 in parallel with output current i1 from the wind power generator 20 (i1+i=i2). Although, typically, this parallel inverter 64 is, for example, a device such as an active power filter, a static reactive power compensation device (STATCOM), a self-commutated SFC, and so on, besides these, a parallel compensation unit that is provided in a direct-parallel inverter in a unified power flow controller (UPFC) and so on may be used.

According to the resonance suppression device 10 configured as described above, in the current command value calculation unit 50, the representative frequency extraction unit 54 extracts representative frequency f, in which harmonic component Vₕ is relatively large compared to other frequencies, from harmonic components Vₕ of connection point voltage V, and the fixed gain output unit 56 and the variable gain output unit 58 (gain multiplication unit) calculate current command value i* by multiplying harmonic component Vₕ by gain K' (= K₀/f) that matches representative frequency f. Thus, by utilizing characteristics of the system including the wind power generator (power facility) 20 and the power system 30, optimal gain K' is always set, dynamically, so that the resonance suppression device 10 can implement an excellent resonance suppression function.

In other words, the resonance suppression device actively exploits the relationship between the impedance and the gain of the power system, and, when the phenomenon of resonance occurs in the power system, the resonance suppression device adjusts the coefficient, by which the gain is multiplied, by utilizing the property that the resonance suppression effect can be achieved even if compensation current is made smaller as the resonance frequency increases. For example, when the number of wind turbines in a wind power plant changes and the resonance frequency decreases, the proper gain tends to increase. This is because the impedance of the power system -- in particular, the impedance of serial devices -- is comprised mainly of inductance components, and the impedance decreases as the frequency becomes lower. When the system impedance decreases, the impedance of the resonance suppression device also decreases proportionally. The resonance suppression device behaves as a pure resistive load and the resistance value becomes the reciprocal of the gain, and therefore the proper gain increases. By utilizing the property that the proper gain increases as the resonance frequency decreases, the gain is adjusted based on the frequency of harmonic components of the system voltage, and, furthermore, harmonic current is absorbed in harmonic voltage in the same phase, so that it is possible to implement an excellent resonance suppression function.

### ≪ Second Embodiment ≫

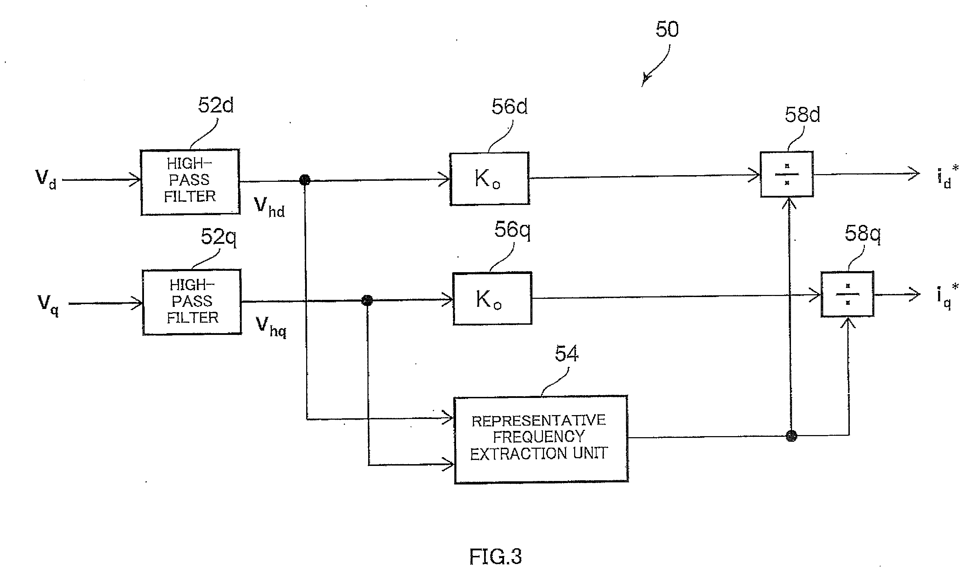

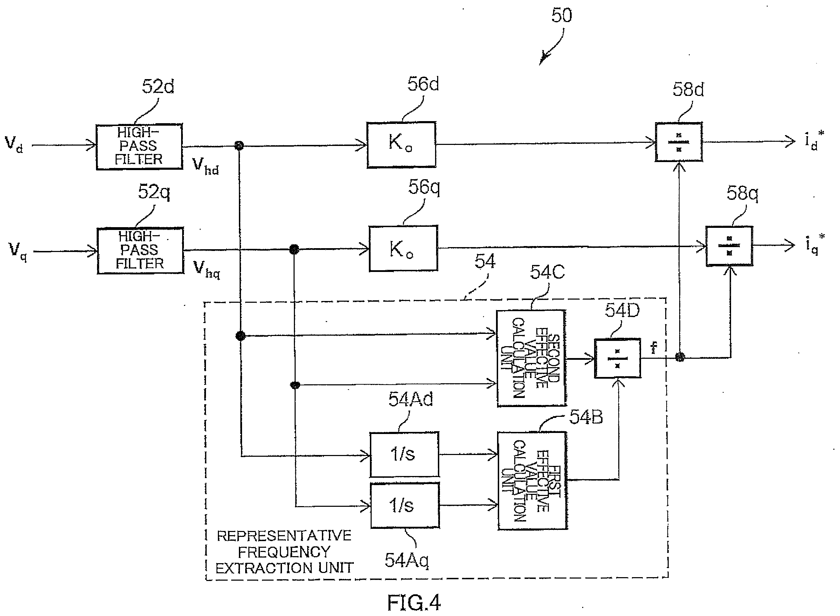

FIG. 3 and FIG. 4 are each a block diagram to show a current command value calculation unit 50 of the resonance suppression device 10 according to a second embodiment. The resonance suppression device 10 of the second embodiment is a device for suppressing the resonance produced in a three-phase power system.

As shown in FIG. 3 and FIG. 4, in the current command value calculation unit 50 of the resonance suppression device 10 according to the second embodiment, various components of the input/output systems are provided in association with the d axis and the q axis of a biaxial rectangular coordinate system.

To be more specific, the current command value calculation unit 50 has a high-pass filter 52d, which corresponds to the d axis of the biaxial rectangular coordinate system, a fixed gain output unit (first gain multiplication unit) 56d and a variable gain output unit (first gain multiplication unit) 58d. A representative frequency extraction unit 54 has a Laplace integration unit (integration unit) 54Ad, which corresponds to the d axis of the biaxial rectangular coordinate system.

Similarly, the current command value calculation unit 50 has a high-pass filter 52q, which corresponds to the q axis of the biaxial rectangular coordinate system, a fixed gain output unit (second gain multiplication unit) 56q and a variable gain output unit (second gain multiplication unit) 58q. The representative frequency extraction unit 54 has a Laplace integration unit (integration unit) 54Aq, which corresponds to the q axis of the biaxial rectangular coordinate system.

The d-axis voltage V_{d} of the connection point voltage V between the wind power generator 20 and the power system 30 is input to the high-pass filter 52d. The high-pass filter 52d selectively allows only harmonic components V_{hd} of d-axis voltage V_{d} of connection point voltage V, which is received as input, to pass. The q-axis voltage V_{q} of connection point voltage V between the wind power generator 20 and the power system 30 is input to the high-pass filter 52q. The high-pass filter 52q selectively allows only harmonic components V_{hq} of q-axis voltage V_{q} of connection point voltage V, which is received as input, to pass.

The Laplace integration unit 54Ad Laplace-integrates (integrates) harmonic component V_{hd} of d-axis voltage V_{d} of connection point voltage V. The Laplace integration unit 54Aq Laplace-integrates (integrates) harmonic component V_{hq} of q-axis voltage V_{q} of connection point voltage V. The first effective value calculation unit 54B calculates the effective values of the Laplace-integrated values (integrated values) of harmonic component V_{hd} of d-axis voltage V_{d} of connection point voltage V and harmonic component V_{hq} of q-axis voltage V_{q}. The second effective value calculation unit 54C calculates the effective values of harmonic component V_{hd} of d-axis voltage V_{d} of connection point voltage V and harmonic component V_{hq} of q-axis voltage V_{q}. The division unit 54D extracts representative frequency f by dividing the effective values of harmonic component V_{hd} of d-axis voltage V_{d} of connection point voltage V and harmonic component V_{hq} of q-axis voltage V_{q} by the effective values of the Laplace-integrated values (integrated values) of harmonic component V_{hd} of d-axis voltage V_{d} of connection point voltage V and harmonic component V_{hq} of q-axis voltage V_{q}.

The fixed gain output unit 56d and the variable gain output unit 58d (first gain multiplication unit) calculate a current command value i_{d}^{*}, which corresponds to the d axis, by multiplying harmonic component V_{hd} of d-axis voltage V_{d} of connection point voltage V by a variable gain K' (= K₀/f) that is inversely proportional to representative frequency f. The fixed gain output unit 56q and the variable gain output unit 58q(second gain multiplication unit) calculate a current command value i_{q}^{*}, which corresponds to the q axis, by multiplying harmonic component V_{hq} of q-axis voltage V_{q} of connection point voltage V by variable gain K' (= K₀/f) that is inversely proportional to representative frequency f.

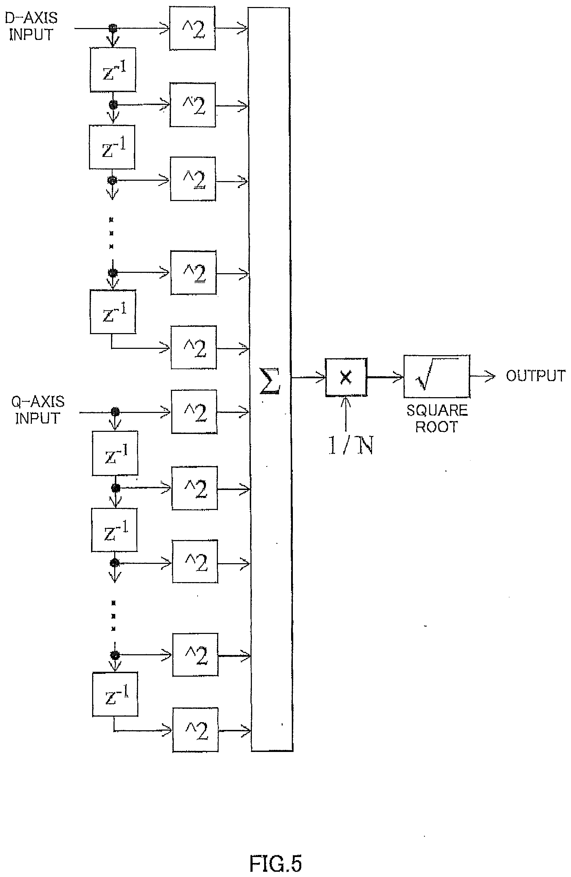

FIG. 5 shows an example of a specific configuration of the first effective value calculation unit 54B and the second effective value calculation unit 54C in the representative frequency extraction unit 54 of the second embodiment. The effective value (effective value of integration) is calculated by sampling the input data at past N points (input data corresponding to the d-axis and input data corresponding to the q axis), squaring each and determining a total sum, and then multiplying this by 1/N and determining the square root.

Note that the present invention is not limited to the above embodiments, and various changes can be made. The above embodiment are by no means limited to the size, shape, function and so on of each component shown in the attached drawings, and adequate changes can be made within the range the effect of the present invention can be achieved. Besides, various alterations can be implemented as appropriate without departing from the scope of the object of the present invention.

For example, the power facility may be a power generation facility that may produce resonance, such as a wind power generator or a solar power generator, may be a consumer facility that has a power supply device for railway use or for an aluminum smelting plant, and that may produce resonance, or may be a transmission/distribution facility that may produce resonance such as a DC power transmission converter (there are degrees of freedom as to what is applicable as a power facility).

### Industrial Applicability

The resonance suppression device of the present invention is suitable for application to, for example, a wind power plant equipped with a wind power generator.

## Claims

1. A resonance suppression device for a system comprising a power facility and a power system, the resonance suppression device comprising:
a current command value calculation unit (50) configured to calculate a current command value based on a connection point voltage between the power facility (20) and the power system (30); and
a compensation current supply unit (60) configured to supply a compensation current based on the current command value to the power system (30),
wherein the current command value calculation unit (50) comprises:
a representative frequency extraction unit (54) configured to extract a representative frequency, in which a harmonic component is large compared to other frequencies and at which the harmonic component (Vₕ) becomes the largest, from harmonic components of the connection point voltage; and
a gain multiplication unit (56, 58) configured to calculate the current command value by multiplying the harmonic component by a gain that matches the representative frequency,
**characterized in that** the gain multiplication unit (56, 58) is configured to make smaller the gain, by which the harmonic component is multiplied, as the representative frequency increases, and make bigger the gain, by which the harmonic component is multiplied, as the representative frequency decreases,
wherein the gain multiplication unit (56, 58) is configured to multiply the harmonic component by a gain that is inversely proportional to the representative frequency.

2. The resonance suppression device according to one of claim 1, wherein the gain multiplication unit (56, 58) comprises:
a fixed gain output unit configured to output a fixed gain (K₀); and
a variable gain output unit configured to output a variable gain (K') by dividing the fixed gain by the representative frequency.

3. The resonance suppression device according to one of claim 1 to claim 2, wherein the representative frequency extraction unit (54) is configured to extract the representative frequency by dividing an effective value of the harmonic component by an effective value of an integrated value of the harmonic component.

4. The resonance suppression device according to one of claim 1 to claim 3, wherein the gain multiplication unit (56, 58) comprises:
a first gain multiplication unit (56, 58) configured to receive a harmonic component corresponding to a d axis in a biaxial rectangular coordinate system as an input, and output a power command value corresponding to the d axis; and
a second gain multiplication unit (56, 58) configured to receive a harmonic component corresponding to a q axis in the biaxial rectangular coordinate system as an input, and output a current command value corresponding to the q axis.

## Patentansprüche

1. Resonanzunterdrückungsvorrichtung für ein System aufweisend ein Kraftwerk und ein Stromversorgungssystem, das Resonanzunterdrückungssystem aufweisend:
eine Strombefehlswertberechnungseinheit (50), welche dafür eingerichtet ist, einen Strombefehlswert basierend auf einer Anschlusspunktspannung zwischen dem Kraftwerk (20) und dem Stromversorgungssystem (30) zu berechnen; und
eine Kompensationsstromversorgungseinheit (60), welche dafür eingerichtet ist, dem Stromversorgungssystem (30) einen Kompensationsstrom basierend auf dem Strombefehlswert zuzuführen,
wobei die Strombefehlswertberechnungseinheit (50) aufweist:
eine repräsentative Frequenzextraktionseinheit (54), welche dafür eingerichtet ist, aus harmonischen Komponenten der Anschlusspunktspannung eine repräsentative Frequenz zu extrahieren, in welcher eine harmonische Komponente im Vergleich zu anderen Frequenzen groß ist, und bei welcher die harmonische Komponente (Vₕ) am größten wird; und
eine Verstärkungsmultiplikationseinheit (56, 58), welche dafür eingerichtet ist, den Strombefehlswert durch Multiplizieren der harmonischen Komponente mit der Verstärkung (dem Verstärkungsgrad), welche der repräsentativen Frequenz entspricht, zu berechnen,
**dadurch gekennzeichnet, dass** die Verstärkungsmultiplikationseinheit (56, 58) dafür eingerichtet ist, die Verstärkung, mit welcher die harmonische Komponente multipliziert wird, zu verkleinern, wenn die repräsentative Frequenz steigt, und die Verstärkung, mit welcher die harmonische Komponente multipliziert wird, zu vergrößern, wenn die repräsentative Frequenz sinkt,
wobei die Verstärkungsmultiplikationseinheit (56, 58) dafür eingerichtet ist, die harmonische Komponente mit der Verstärkung, welche umgekehrt proportional zur repräsentativen Frequenz ist, zu multiplizieren.

2. Resonanzunterdrückungsvorrichtung nach Anspruch 1, wobei die Verstärkungsmultiplikationseinheit (56, 58) aufweist:
eine feste Verstärkungsausgabeeinheit, welche dafür eingerichtet ist, eine feste Verstärkung (K₀) auszugeben; und
eine variable Verstärkungsausgabeeinheit, welche dafür eingerichtet ist, eine variable Verstärkung (K') auszugeben, indem sie die feste Verstärkung durch die repräsentative Frequenz dividiert.

3. Resonanzunterdrückungsvorrichtung nach einem der Ansprüche 1 bis 2, wobei die repräsentative Frequenzextraktionseinheit (54) dafür eingerichtet ist, die repräsentative Frequenz zu extrahieren, indem sie einen Effektivwert der harmonischen Komponente durch einen Effektivwert eines integrierten Werts der harmonischen Komponente dividiert.

4. Resonanzunterdrückungsvorrichtung nach einem der Ansprüche 1 bis 3, wobei die Verstärkungsmultiplikationseinheit (56, 58) aufweist:
eine erste Verstärkungsmultiplikationseinheit (56, 58), welche dafür eingerichtet ist, eine harmonische Komponente, welche einer d-Achse in einem zweiachsigen rechtwinkligen Koordinatensystem entspricht, als eine Eingabe zu empfangen, und einen Strombefehlswert, welcher der d-Achse entspricht, auszugeben; und
eine zweite Verstärkungsmultiplikationseinheit (56, 58), welche dafür eingerichtet ist, eine harmonische Komponente, welche einer q-Achse in dem zweiachsigen rechtwinkligen Koordinatensystem entspricht, als eine Eingabe zu empfangen, und einen Strombefehlswert, welcher der q-Achse entspricht, auszugeben.

## Revendications

1. Dispositif de suppression de résonance pour un système comprenant une installation électrique et un système électrique, le dispositif de suppression de résonance comprenant :
une unité de calcul de valeur d'instruction de courant (50) configurée de manière à calculer une valeur d'instruction de courant sur la base d'une tension de point de connexion entre l'installation électrique (20) et le système électrique (30) ; et
une unité d'alimentation en courant de compensation (60) configurée de manière à fournir un courant de compensation basé sur la valeur d'instruction de courant au système électrique (30) ;
dans lequel l'unité de calcul de valeur d'instruction de courant (50) comprend :
une unité d'extraction de fréquence représentative (54) configurée de manière à extraire une fréquence représentative, dans laquelle une composante harmonique est élevée par rapport à d'autres fréquences, et à laquelle la composante harmonique (Vₕ) devient la plus élevée, à partir de composantes harmoniques de la tension de point de connexion ; et
une unité de multiplication de gain (56, 58) configurée de manière à calculer la valeur d'instruction de courant en multipliant la composante harmonique par un gain qui correspond à la fréquence représentative ;
**caractérisé en ce que** l'unité de multiplication de gain (56, 58) est configurée de manière à diminuer le gain, par lequel la composante harmonique est multipliée, lorsque la fréquence représentative augmente, et à augmenter le gain, par lequel la composante harmonique est multipliée, lorsque la fréquence représentative diminue ;
dans lequel l'unité de multiplication de gain (56, 58) est configurée de manière à multiplier la composante harmonique par un gain qui est inversement proportionnel à la fréquence représentative.

2. Dispositif de suppression de résonance selon la revendication 1, dans lequel l'unité de multiplication de gain (56, 58) comprend :
une unité de fourniture en sortie de gain fixe configurée de manière à fournir en sortie un gain fixe (K₀) ; et
une unité de fourniture en sortie de gain variable configurée de manière à fournir en sortie un gain variable (K') en divisant le gain fixe par la fréquence représentative.

3. Dispositif de suppression de résonance selon l'une quelconque des revendications 1 à 2, dans lequel l'unité d'extraction de fréquence représentative (54) est configurée de manière à extraire la fréquence représentative en divisant une valeur efficace de la composante harmonique par une valeur efficace d'une valeur intégrée de la composante harmonique.

4. Dispositif de suppression de résonance selon l'une quelconque des revendications 1 à 3, dans lequel l'unité de multiplication de gain (56, 58) comprend :
une première unité de multiplication de gain (56, 58) configurée de manière à recevoir une composante harmonique correspondant à un axe « d » dans un système de coordonnées rectangulaires biaxial, en tant qu'entrée, et à fournir en sortie une valeur d'instruction de puissance correspondant à l'axe « d » ; et
une seconde unité de multiplication de gain (56, 58) configurée de manière à recevoir une composante harmonique correspondant à un axe « q » dans le système de coordonnées rectangulaires biaxial, en tant qu'entrée, et à fournir en sortie une valeur d'instruction de courant correspondant à l'axe « q ».
